Europäisches Patentamt

**European Patent Office**

Office européen des brevets

(11) Publication number: **0 077 655**
**B1**

(12) **EUROPEAN PATENT SPECIFICATION**

(45) Date of publication of patent specification: **18.03.87**

(51) Int. Cl.⁴: **G 05 B 19/23**

(21) Application number: **82305488.7**

(22) Date of filing: **15.10.82**

(54) Backlash compensation method and apparatus.

(30) Priority: **20.10.81 JP 167613/81**

(43) Date of publication of application:
**27.04.83 Bulletin 83/17**

(45) Publication of the grant of the patent:
**18.03.87 Bulletin 87/12**

(84) Designated Contracting States:
**DE FR GB**

(56) References cited:
**GB-A-2 019 611
US-A-3 585 376
US-A-3 616 993
US-A-3 646 419**

(73) Proprietor: **FANUC LTD**
**3580, Shibokusa Aza-Komanba Oshino-mura
Minamitsuru-gun Yamanashi 401-05 (JP)**

(72) Inventor: **Fukuyama, Hiroomi
719-644, Yano-cho Hachioji-shi
Tokyo (JP)**
Inventor: **Isobe, Shinichi
Hinodai-Haitsu 516 1-1-1, Hinodai
Hino-shi, Tokyo (JP)**

(74) Representative: **Billington, Lawrence Emlyn
et al
HASELTINE LAKE & CO Hazlitt House 28
Southampton Buildings Chancery Lane
London WC2A 1AT (GB)**

Courier Press, Leamington Spa, England.

# Description

This invention relates to a backlash compensation method and apparatus and, more particularly, to a backlash compensation method and apparatus suitable for application to the control of a machine tool.

Since backlash generally develops in the drive system of a machine tool, positioning and cutting errors will result unless backlash is compensated for when the direction of movement is changed in positioning and continuous cutting control operations. Accordingly, it is common practice to effect the backlash compensation when changing the moving direction.

Two methods of backlash compensation are available in the prior art. The first method includes steps of performing cutting based on the cutting command of the currently prevailing block of data, and effecting a backlash compensation, after the completion of cutting based on the current block and before the start of cutting based on the next block, by generating backlash compensation pulses of a number corresponding to the amount of backlash. Cutting based on the cutting command in the next block of data is performed following the backlashcompensation. Adopting this method makes it possible to obtain a machined workpiece with sharp edges just as specified by the cutting commands, without any error manifesting itself at the corner portions of the work-piece. However, since the backlash compensation at the corner portions (the positions at which the cutting direction is changed) is made after temporarily stopping the cutting operation, cutter marks are left at the corner portions so that it is impossible to obtain a smoothly cut surface at the corners. This detracts from the overall appearance of the workpiece. Moreover, the total machining time is prolonged by the time required for the backlash compensation. And since the cutting direction generally is changed any number of times to complete the cutting of a single workpiece, with backlash being compensated for upon each change in direction, the amount of time devoted to the backlash compensation operation is of considerable significance.

With the second method of backlash compensation, cutting is completed based on the cutting command of the current block, after which the backlash compensation is made at the same time that cutting starts based on the next block of data. Since the backlash compensation and the cutting operation based on the next block proceed simultaneously, there is no prolongation of machining time because time need not be set aside especially for compensation. It is also possible to obtain corner portions having smoothly cut surfaces. A disadvantage encountered with this method, however, is a decline in the cutting precision at the corner portions. Specifically, when changing the cutting direction, there are cases where movement directed along one axis, say a first axis, remains unchanged even though there is a change in movement along another axis, i.e., a second axis. At such times, the movable element, such as a table, will move immediately along the first axis in response to the command at the commanded speed, but will not move along the second axis until a certain time after the backlash has been cancelled. The result is diminished accuracy when changing the cutting direction. For example, the second method will make it impossible to cut a true circle.

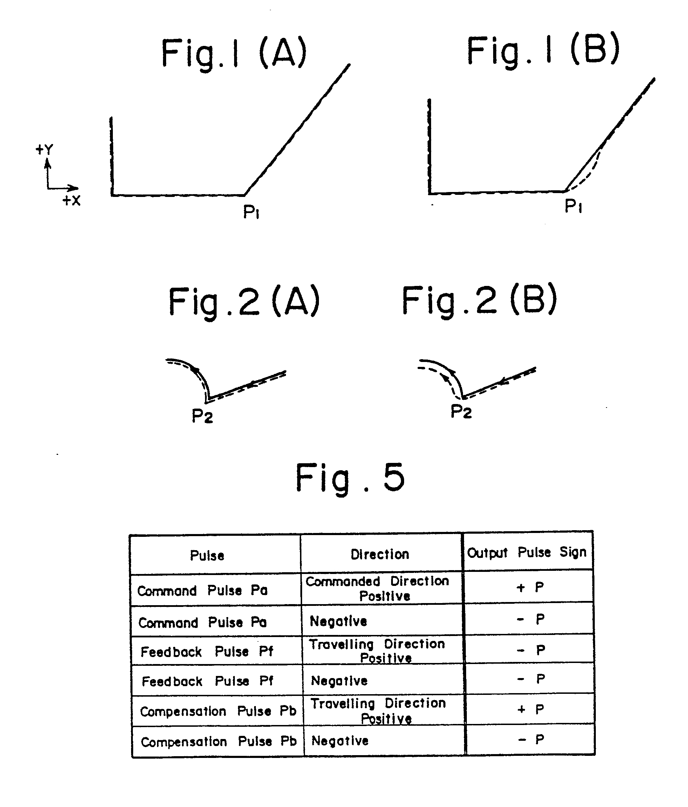

The first and second backlash compensation methods can be better understood by referring to Figs. 1 and 2. Fig. 1 illustrates the cut shape of a corner portion for a case where the cutting direction is changed, at a point P1, solely along the Y axis, in which (A) shows the cut shape according to the first method and (B) the cut shape according to the second method. It will be seen that a corner portion with a sharp edge is obtained with the first method, but that the cut is too deep or too shallow with the second method, though this method does provide a corner portion having a smoothly cut shape.

Fig. 2 illustrates the cut shape of a corner portion for a case where the cutting direction is changed, at a point P2 where a straight line and circular arc intersect, solely along the Y axis, in which (A) shows the cut shape according to the first method and (B) the cut shape according to the second method. The solid line in (A) and (B) of Fig. 2 indicates the commanded shape, and the broken line the shape actually cut. It will be appreciated from Fig. 2 that the first method makes it possible to cut a circular arc conforming to the command, but that a true circle cannot be obtained with the second method since the movement along the Y axis is delayed by the time required for the backlash correction. The second method provides a smoothly cut shape at the point P2, however, whereas the first method provides a sharp cut at the point P2.

Thus, the first and second methods of backlash compensation according to the prior art each have their advantages and disadvantages. In actual cutting operations, however, there are instances where a corner portion is required to be cut to an error-free sharp edge using the first method of backlash compensation, or to a smoother shape of greater continuity, even if there is some degree of error in the shape of the corner portion, using the second method of backlash compensation.

According to a first aspect of the present invention there is provided a method of compensating for backlash in a machine tool, comprising the steps of: issuing a command for selecting one of first and second backlash compensation modes; storing in memory the selected backlash compensation mode; discriminating whether the direction of movement of a movable element of the machine tool has reversed along at least one axis; completing a cutting operation based on a command in a currently prevailing block of data if the first backlash compensation mode is the selected mode when there is a reversal in the direction of movement along at least one axis, thereafter compensating for a backlash prior to the start of a cutting operation based on a command in the next block of data, and subsequently performing the cutting operation based on the command in said next block of data; and compensating for backlash, at the same time the movable element is travelling, based on a command in a currently prevailing block of data after a reversal in the direction of movement along at least one axis if the second backlash compensation mode is the selected mode at the reversal.

According to a second aspect of the present invention there is provided an apparatus for compensating for backlash in a machine tool, the apparatus being adapted and arranged to employ a method, when the apparatus is in use, comprising the steps of: receiving a command for selecting one of first and second backlash compensation modes; storing in memory the selected backlash compensation mode; discriminating whether the direction of movement of a movable element of the machine tool has reversed along at least one axis; completing a cutting operation based on a command in a currently prevailing block of data if the first backlash compensation mode is the selected mode when there is a reversal in the direction of movement along at least one axis, thereafter compensating for backlash prior to the start of a cutting operation based on a command in the next block of data, and subsequently performing the cutting operation based on the command in said next block of data; and compensating for backlash, at the same time the movable element is travelling, based on a command in a currently prevailing block of data after a reversal in the direction of movement along at least one axis if the second backlash compensation mode is the selected mode at the reversal.

Examples of the present invention may provide a novel backlash compensation method and apparatus which enable the first and second methods of backlash compensation to be employed selectively as desired.

Examples of the present invention may provide a novel backlash compensation method and apparatus which enable changeover between the first and second methods of backlash compensation in the course of a machining operation.

Examples of the present invention may provide a novel backlash compensation method and apparatus which enable either of the first and second methods of backlash compensation to be selected by a G-function instruction.

Other features and advantages of examples of the invention will be apparent from the following description in connection with the accompanying drawings, in which:

Figs. 1 and 2 are illustrative views useful in describing the cut shape of a corner portion and circular arc, respectively, according to the first and second backlash compensation methods;

Fig. 3 is a block diagram of an apparatus for practising the method of the present invention;

Fig. 4 is a block diagram of a compensating circuit included in the block diagram of Fig. 3; and

Fig. 5 is a chart useful in describing the code of an output signal produced by an encoding circuit.

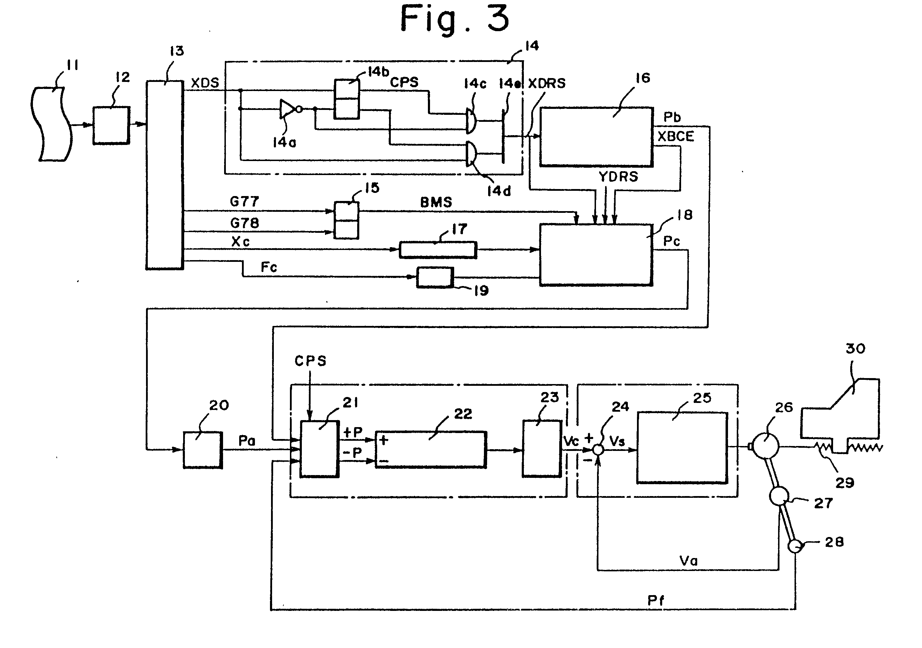

Referring to Fig. 3, a paper tape 11 bearing punched NC data is read by a paper tape reader 12 whose output is connected to a decoder 13. Numeral 14 denotes a circuit for sensing a change (i.e. a reversal) in the direction of movement along the X axis. Although a similar circuit is provided for the Y axis, it is not shown. The circuit 14 includes a NOT gate 14a, a clocked flip-flop 14b, two AND gates 14c, 14d, and an OR gate 14e. The decoder 13 produces a code signal XDS indicative of forward, or positive, movement when at logical "1", and of reverse, or negative, movement when at logical "0". The flip-flop 14b is set when the code signal XDS is a "1", and reset when the signal is a "0". Accordingly, when there is a reversal in direction along the X axis, one of the AND gates 14c, 14d will produce a "1" output until the next positive-going transition of the flip-flop clock, causing the OR gate 14e to produce a direction reversal signal XDRS. By way of example, let us assume that the movable element is travelling in the positive direction based on the currently prevailing block of data (that is, flip-flop 14b is in the set state), but that the direction of movement will be negative (signal XDS = logical "0") in the next block. When such is the case, AND gate 14c delivers a "1" output when decoder 13 issues the code signal XDS (logical 0) for the next block, whereby OR gate 14e delivers the direction reversal signal XDRS.

A flip-flop 15 is provided for storing a backlash compensation mode. More specifically, the flip-flop 15 is set when a G-function instruction G77 is read from the paper tape 11, and reset when a G-function instruction G78 is read from the tape, producing from its set output terminal a backlash mode signal BMS which is logical "1" in the former case and logical "0" in the latter. G77 is a G-function instruction indicative of a first backlash compensation mode, and G78 a G-function instruction indicative of a second backlash compensation mode. The first backlash compensation mode indicates that, when there is a reversal in the direction of movement, the backlash compensation is to be performed before cutting the workpiece on the basis of the cutting command in the next block. The second backlash compensation mode indicates that, when there is a reversal in the direction of movement, the backlash compensation is to be performed at the same time that cutting starts based upon the command in the next block.

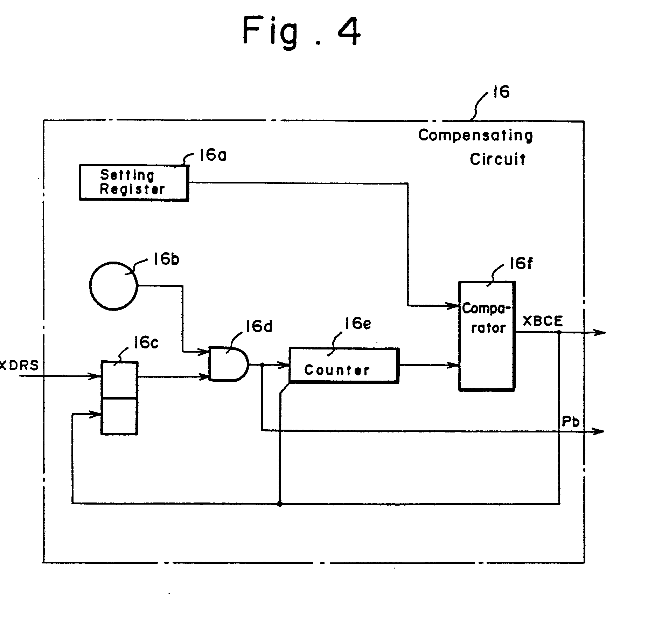

The output of OR gate 14e in the sensing circuit 14 is applied to a compensating circuit 16 for generating backlash compensation pulses Pb as well as the backlash compensation end signal XBCE. The latter is produced when the generated pulses Pb reach a number N equivalent to the amount of backlash. As shown in Fig. 4, the backlash compensating circuit 14 includes a setting register in which the amount of backlash N is set, a pulse generating circuit 16b for generating a pulse train of a predetermined frequency, a flip-flop 16c set by the direction reversal signal XRDS (i.e., logical "1") and reset by the backlash compensation end signal XBCE (logical "1"), and AND gate 16d opened when flip-flop 16c is in the set state for delivering, as the compensation pulses Pb, the pulses produced by the pulse generating circuit 16b, a counter 16e for counting the backlash compensation pulses Pb, and a comparator 16f for comparing the status of the count in counter 16e (namely the number of generated backlash compensation pulses Pb) with the amount of backlash N set in the setting register 16a, and for producing the backlash compensation end signal XBCE when coincidence between Pb and N is achieved. The signal XBCE resets the flip-flop 16c and the counter 16e.

Returning to Fig. 3, there is provided a buffer register 17 for storing a numerical value Xc representing the magnitude of a command for movement along the X axis. The output of register 17 is connected to a pulse distributing circuit 18 which executes a pulse distribution operation on the basis of the X-axis movement command value Xc for generating command pulses Pc. A pulse generating circuit 19 receives a commanded frequency Fc from the decoder 13 for generating a pulse train, applied to the pulse distributing circuit 18, of which the number of pulses conforms to the commanded frequency Fc. When the backlash mode signal BMS is logical "0", namely when the second backlash compensation mode prevails, the pulse distributing circuit 18 begins executing the pulse distribution operation immediately upon the arrival of the commanded value Xc in the next block of data, even when there is a reversal in the direction of movement along the X or Y axis (that is, even when the direction reversal signal XDRS, or a direction reversal signal YDRS relating to the Y axis, is logical "1"). On the other hand, when the backlash mode signal BMS is logical "1", namely when the first backlash compensation mode prevails, and, moreover, when the direction reversal signal XDRS or YDRS is logical "1", the pulse distributing circuit 18 will remain inactive even upon receipt of the commanded value Xc in the next block, but will initiate a pulse distribution operation under these conditions when the backlash compensation end signal XBCE is generated by the compensating circuit 16.

The command pulses Pc enter a known accelerating/decelerating circuit 20 which raises the frequency of the train of command pulses Pc when the pulse train starts, and which lowers the frequency thereof when the pulse train ends, producing output pulses Pa which are applied to a pulse encoding circuit 21. The latter, which also receives feedback pulses Pf, to be described below, converts the pulses Pa, the pulses Pf and the backlash compensation pulses Pb into positive pulses $^+$P and negative pulses $^-$P in accordance with the logic level of a commanded direction signal CPS, wherein logical "1" indicates positive or forward movement, and logical "0" indicates negative or reverse movement. It should be noted that the set terminal output of flip-flop 14b serves as the signal CPS. The pulse encoding operation performed by the encoding circuit 21 follows the rules shown in Fig. 5. The output of the pulse encoding circuit 21 is applied to an error register 22 whose status is counted up when a positive pulse $^+$P is generated and counting down when a negative pulse $^-$P is generated, so that the register stores the difference between the number of command pulses and the number of feedback pulses at all times. The output of the error register 22 is applied to a digital-to-analog converter (referred to as a DA converter hereafter) 23 for generating an analog voltage (speed command voltage) Ep which is proportional to the status of the error register 22. An analog adding/subtracting circuit 24 computes the difference between the speed command voltage Vc and a voltage Va indicative of the actual speed of a motor, as will be described later, and produces a voltage Vs indicative of the computed difference. A speed control circuit 25 drives a servo motor, such as a DC motor 26, in accordance with the difference voltage Vs received from the adder/subtractor 24. A tachometer 27 is connected directly to the shaft of the servo motor 26 for producing the actual speed voltage signal Va, which is proportional to the actual speed of the servo motor. A pulse coder 28 generates a single feedback pulse Pf each time the servo motor 26 rotates through a predetermined angle. Numeral 29 designates a lead screw, and 30 a table serving as the movable element.

In the operation of the apparatus shown in Fig. 3, we will first assume that the table 30 is moving in the positive or forward direction in accordance with the currently prevailing block of data, and that the commanded direction of movement will be positive also in the next block, where the commanded amount of travel is Xc and the commanded speed is Fc. When the cutting command in the next block of data is read from the paper tape 11 at the end of movement based on the currently prevailing block, the decoder 13 issues the code signal XDS, the commanded numerical value Xc for movement along the X axis, and the commanded speed Fc. (It should be noted that the data in the next block can be preread, i.e., read in advance, while numerical control is in progress based upon the data in the current block). The commanded numerical value Xc is applied to the pulse distributing circuit 18 through the buffer register 17, and the commanded speed signal Fc enters the pulse generating circuit 19 which produces a pulse train having a frequency in accordance with the commanded speed, the pulse train being fed into the pulse distributing circuit 18. Since we are assuming that there will be no change in the direction of movement along the X and Y axes (direction reversal signals XDRS, YDRS = logical zero), the pulse distributing circuit 18 immediately executes a pulse distribution operation for producing the command pulses Pc of a number corresponding to Xc and having the predetermined frequency.

These pulses are fed to the pulse encoding circuit 21 through the pulse train accelerating/decelerating circuit 20. The pulse encoding circuit 21 converts the command pulses Pc into the positive pulses $^+$P or negative pulses $^-$P in accordance with logic level of the commanded direction signal CPS (logical "1" for the positive direction and logical "0" for the negative direction). Since the commanded direction is positive in this case, the pulse encoding circuit 21 produces the positive pulses $^+$P, with the result that the status of error register 22 is up-counted by the pulses $^+$P. The DA converter 23 generates the speed command voltage Vc proportional to the status of the error register 22, and the adding/subtracting circuit 24 computes the difference between Vc and the actual speed voltage Va from the tachometer 27 connected to the servo motor 26, producing the difference voltage Vs. The speed control circuit 25 receives the difference voltage Vs and rotates the servo motor 26 accordingly. As the servo motor 26 rotates, table 30 is moved in the commanded direction by the lead screw 29, and the pulse coder 28 generates the feedback pulses Pf, each pulse being produced whenever the servo motor 26 rotates by a predetermined amount. The feedback pulses Pf are applied to the pulse encoding circuit 21 which converts the pulses into the positive or negative pulses $^+$P, $^-$P in accordance with the logic ("1" or "0" respectively) of the commanded direction signal CPS. Note that the negative pulses $^-$P are produced since the commanded direction is positive. The status of error register 22 is counted down each time a negative pulse $^-$P is produced. In other words, the error register 22 constantly keeps track of the difference between the command pulses Pc ($^+$P) and the feedback pulses Pf ($^-$P), and the servo motor 26 is rotated in such a manner that the difference voltage Vs between the actual speed voltage Va and the speed command voltage Vp, the magnitude whereof is proportional to the difference in the error register 22, is made to approach zero, that is, in such a manner that the positional deviation of the table 30 from the commanded position is made to approach zero. The table 30 is thus brought to the commanded position.

If the commanded direction of movement changes to the $-$X direction (i.e., signal XDS goes to logical "0") after the table 30 is moved and positioned in the $+$X direction in the above-described manner, then the output of AND gate 14c goes to logical "11", sending the direction reversal signal XDRS to logical "1". In consequence, the compensating circuit 16 produces the preset number of backlash compensation pulses Pb, which are then fed to the pulse encoding circuit 21. The latter converts the backlash compensation pulses Pf into the positive or negative pulses $^+$P, $^-$P in accordance with the logic, either "1" or "0", of the commanded direction signal CPS. Here the commanded direction is negative, so that the negative pulses $^-$P are produced. We shall assume that G77 has been previously read in from the paper tape 11, setting the flip-flop 15 and selecting the first backlash compensation mode. Accordingly, the pulse distributing circuit 18 will not execute a pulse distribution operation, even if it receives the command numerical value Xc for movement along the X axis.

When the backlash is compensated for by the preset number of backlash compensating pulses Pb generated by the compensating circuit 16, the latter delivers a backlash compensation end signal XBCE to the pulse distributing circuit 18 which then starts a pulse distribution operation to produce the command pulses Pc. As a result, the table 30 begins to be moved in the $-$X direction upon completion of the backlash compensation operation.

In a case where the flip-flop 15 is placed in the reset state by the G-function instruction 78 (backlash mode signal BMS = logical "0"), that is, when the second backlash compensation mode has been selected, the pulse distributing circuit 18 performs a pulse distribution operation on the basis of the command numerical value Xc as the compensating circuit 16 concurrently produces the backlash compensation pulses Pb. Thus, backlash compensation and movement of the table take place at the same time.

It has been described in the foregoing that the backlash compensation modes are selected by the G-function commands G77, G78 read from the paper tape. It is clear, however, that the selection can be made by providing a backlash compensation mode selection switch on a control panel or the like.

In accordance with the present embodiment as illustrated and described hereinabove, two modes of backlash compensation can be selected at will so that a corner portion can be cut to a sharp edge in one mode and to a more rounded edge in the other. The embodiment also makes it possible to perform a cutting operation in which curved lines and surfaces expressed by a multiplicity of minute line segments are smoothly connected.

There has been disclosed a method and apparatus for compensating for backlash in a machine tool, utilising the steps of issuing a command for selecting one of first and second backlash compensation modes, storing in memory the selected backlash compensation mode, discriminating whether the direction of movement of a movable element of the machine tool has reversed along at least one axis, completing a cutting operation based on a command in a currently prevailing block of data if the first backlash compensation mode is the selected mode when there is a reversal in the direction of movement along at least one axis, thereafter compensating for backlash prior to the start of a cutting operation based on a command in the next block of data, and subsequently performing the cutting operation based on the command in the next block of data, and compensating for backlash, at the same time the movable element is travelling, based on a command in a currently prevailing block of data if the second backlash compensation mode is the selected mode when there is a reversal in the direction of movement along at least one axis.

## Claims

1. A method of compensating for backlash in a machine tool, comprising the steps of:
issuing a command for selecting one of first and second backlash compensation modes;
storing in memory the selected backlash compensation mode;
discriminating whether the direction of movement of a movable element of the machine tool has reversed along at least one axis;
completing a cutting operation based on a command in a currently prevailing block of data if the first backlash compensation mode is the selected mode when there is a reversal in the direction of movement along at least one axis, thereafter compensating for backlash prior to the start of a cutting operation based on a command in the next block of data, and subsequently performing the cutting operation based on the command in said next block of data; and
compensating for backlash, at the same time the movable element is travelling, based on a command in a currently prevailing block of data after a reversal in the direction of movement along at least one axis if the second backlash compensation mode is the selected mode at the reversal,

2. A method of compensating for backlash in a machine tool according to claim 1, in which a value representing the amount of backlash is preset, backlash compensating pulses are generated when there is a reversal in direction of movement, and backlash compensation is completed when the number of backlash compensating pulses generated corresponds to said preset value.

3. A method of compensating for backlash in a machine tool according to claim 1 or claim 2, in which switching between the first and second compensation modes is executed in response to a G-function instruction.

4. A method of compensating for backlash in a machine tool according to claim 1 or claim 2, in which a compensation mode selection switch is provided on a control panel, and the first and second compensation modes are switched between by operating said backlash compensation mode selection switch.

5. An apparatus for compensating for backlash in a machine tool, the apparatus being adapted and arranged to employ a method, when the apparatus is in use, comprising the steps of:
receiving a command for selecting one of first and second backlash compensation modes;
storing in memory the selected backlash compensation mode;
discriminating whether the direction of movement of a movable element of the machine tool has reversed along at least one axis;
completing a cutting operation based on a command in a currently prevailing block of data if the first backlash compensation mode is the selected mode when there is a reversal in the direction of movement along at least one axis, thereafter compensating for backlash prior to the start of a cutting operation based on a command in the next block of data, and subsequently performing the cutting operation based on the command in said next block of data; and
compensating for backlash, at the same time the movable element is travelling, based on a command in a currently prevailing block of data after a reversal in the direction of movement along at least one axis if the second backlash compensation mode is the selected mode at the reversal.

6. An apparatus for compensating for backlash in a machine tool according to claim 5, wherein in said method a value representing the amount of backlash is preset, backlash compensating pulses are generated when there is a reversal in direction of movement, and backlash compensation is completed when the number of backlash compensating pulses generated corresponds to said preset value.

7. An apparatus for compensating for backlash in a machine tool according to claim 5 or 6, wherein in said method switching between the first and second compensation modes is executed in response to a G-function instruction.

8. An apparatus for compensating for backlash in a machine tool according to claim 5 or 6, in which a compensation mode selection switch is provided on a control panel, and the first and second compensation modes are switched between by operating said backlash compensation mode selection switch.

## Revendications

1. Méthode de compensation de jeu dans une machine-outil comprenant les opérations de:
émission d'une commande pour sélectionner l'un parmi un premier et un second modes de compensation de jeu;
stockage en mémoire du mode de compensation de jeu sélectionné;
détermination de l'inversion ou non de la direction du mouvement d'un élément mobile de la machine-outil le long d'au moins un axe;
exécution d'une opération de coupe selon une commande du bloc de données actuellement en vigueur si le premier mode de compensation de jeu est le mode sélectionné lorsqu'il y a une inversion de la direction du mouvement le long, d'au moins, un axe, ensuite, la compensation du jeu avant le début d'une opération de coupe selon la commande du prochain bloc de données, et l'exécution ultérieure de l'opération de coupe selon la commande dudit prochain bloc de données; et
compensation de jeu, en même temps que l'élément mobile se déplace, selon une commande du bloc de données actuellement en vigueur, après une inversion de la direction du mouvement le long, d'au moins, un axe si le second mode de compensation de jeu est le mode sélectionné au moment de l'inversion.

2. Méthode de compensation de jeu dans une machine-outil selon la revendication 1, dans laquelle une valeur représentant l'amplitude du jeu est préréglée, des impulsions de compensation de jeu sont générées lorsqu'il y a inversion de la direction du mouvement, et une compensation de jeu est effectuée quand le nombre des impulsions de compensation de jeu générées correspond à ladite valeur préréglée.

3. Méthode de compensation de jeu dans une machine-outil selon l'une des revendications 1 ou 2, dans laquelle la commutation entre le premier et le second modes de compensation est exécutée en réponse à une instruction de fonction G.

4. Méthode de compensation de jeu dans une machine-outil selon la revendication 1 ou la revendication 2, dans laquelle un interrupteur de sélection de mode de compensation est installé sur un panneau de commandes et dans laquelle les premier et second modes de compensation sont commutés l'un à l'autre par une action sur ledit interrupteur de sélection de mode de compensation de jeu.

5. Appareil de compensation de jeu dans une machine-outil l'appareil étant adapté et agencé pour appliquer une méthode, lorsque l'appareil est en service, comprenant les opérations de:

réception d'une commande pour sélectionner un parmi un premier et un second modes de compensation de jeu;

stockage en mémoire du mode de compensation de jeu sélectionné;

discrimination de l'existence ou non d'une inversion de la direction du mouvement d'un élément mobile de la machine-outil le long, au moins, d'un axe;

exécution d'une opération de coupe conformément à une commande du bloc de données actuellement en cours si le premier mode de compensation de jeu est le mode sélectionné lorsqu'il y a une inversion de la direction du mouvement le long, d'au moins, un axe, la compensation ultérieure du jeu avant le début d'une opération de coupe selon une commande du prochain bloc de données, et l'exécution, ensuite, de l'opération de coupe selon la commande dudit prochain bloc de données; et

compensation du jeu, en même temps que l'élément mobile se déplace, en fonction d'une commande d'un bloc de données actuellement en vigueur après une inversion de la direction du mouvement le long, d'au moins, un axe si le second mode de compensation de jeu est le mode sélectionné à l'inversion.

6. Appareil de compensation de jeu dans une machine-outil selon la revendication 5, méthode dans laquelle une valeur représentant l'amplitude du jeu est préréglée, des impulsions de compensation de jeu sont générées lorsqu'il y a inversion de la direction du mouvement, et la compensation de jeu est exécutée quand le nombre des impulsions de compensation de jeu générées correspond à ladite valeur préréglée.

7. Appareil de compensation de jeu dans une machine-outil selon la revendication 5 ou la revendication 6, dans lequel ladite méthode de commutation entre le premier et le second modes de compensation de jeu est exécutée en réponse à une instruction de fonction G.

8. Appareil de compensation de jeu dans une machine-outil selon les revendications 5 ou 6, dans lequel un interrupteur de sélection de mode de compensation est installé sur un panneau de commandes, et dans lequel le premier et le second modes de compensation sont commutés de l'un à l'autre en agissant sur ledit interrupteur de sélection de mode de compensation de jeu.

**Patentansprüche**

1. Verfahren zum Spielausgleich in einer Werkzeugmaschine, mit Schritten zum

Ausgeben eines Befehls zum Auswählen eines von ersten und zweiten Ausgleichsmodi,

Speichern des ausgewählten Ausgleichsmodus in einem Speicher,

Feststellen, ob sich die Bewegungsrichtung eines beweglichen Elements längs zumindest einer Achse umgekehrt hat,

Beenden eines Schneidvorgangs auf der Grundlage eines Befehls in einem augenblicklich vorherrschenden Datenblock, falls der erste Ausgleichsmodus der ausgewählte Ausgleichsmodus ist, wenn eine Umkehrung der Bewegungsrichtung längs zumindest einer Achse vorliegt, danach Ausgleichen des vorhandenen Spiels vor dem Beginn eines Schneidvorgangs auf der Grundlage eines Befehls in dem nächsten Datenblock und nachfolgenden Durchführen des Schneidvorgangs auf der Grundlage des Befehls in dem nächsten Datenblock sowie

Ausgleichen des Spiels zur gleichen Zeit, zu der sich das bewegliche Element bewegt, auf der Grundlage eines Befehls in einem augenblicklich vorherrschenden Datenblock nach einer Umkehrung der Bewegungsrichtung längs zumindest einer Achse, wenn der zweite Ausgleichsmodus der ausgewählte Modus bei der Umkehrung ist.

2. Verfahren zum Spielausgleich in einer Werkzeugmaschine nach Anspruch 1, bei dem ein Wert, der den Betrag des Spiels repräsentiert, voreingestellt wird, Spielausgleichsimpulse erzeugt werden, wenn eine Umkehrung der Bewegungsrichtung vorliegt, und der Spielausgleich beendet wird, wenn die Anzahl der erzeugten Speilausgleichsimpulse mit dem voreingestellten Wert korrespondiert.

3. Verfahren zum Spielausgleich in einer Werkzeugmaschine nach Anspruch 1 oder 2, bei dem ein Umschalten zwischen den ersten und zweiten Ausgleichsmodi in Reaktion auf einen G-Funktionsbefehl ausgeführt wird.

4. Verfahren zum Spielausgleich in einer Werkzeugmaschine nach Anspruch 1 oder 2, bei dem ein Ausgleichsmodus-Auswahlschalter in einem Bedienungsfeld vorgesehen ist und zwischen den ersten und zweiten Ausgleichsmodi durch Betätigen des Ausgleichsmodus-Auswahlschalters hin- und hergeschaltet wird.

5. Gerät zum Spielausgleich in einer Werkzeugmaschine, welches Gerät dazu bestimmt ist und derart eingerichtet ist, daß es im Betrieb ein Verfahren anwenden kann, mit Schritten zum

Aufnehmen eines Befehls zum Auswählen eines von ersten und zweiten Ausgleichsmodi,

Speichern des ausgewählten Ausgleichsmodus in einem Speicher,

Feststellen, ob sich die Bewegungsrichtung eines beweglichen Elements längs zumindest einer Achse umgekehrt hat,

Beenden eines Schneidvorgangs auf der Grundlage eines Befehls in einem augenblicklich vorherrschenden Datenblock, falls der erste Ausgleichsmodus der ausgewählte Ausleichsmodus ist, wenn eine Umkehrung der Bewegungsrichtung längs zumindest einer Achse vorliegt, danach Ausgleichen des vorhandenen Spiels vor dem Beginn eines Schneidvorgangs auf der Grundlage eines Befehls in dem nächsten Datenblock und nachfolgenden Durchführen des Schneidvorgangs auf der Grundlage des Befehls in dem nächsten Datenblock sowie

Ausgleichen des Spiels zur gleichen Zeit, zu der sich das bewegliche Element bewegt, auf der Grundlage eines Befehls in einem augenblicklich vorherrschenden Datenblock nach einer Umkehrung der Bewegungsrichtung längs zumindest einer Achse, wenn der zweite Ausgleichsmodus der ausgewählte Modus bei der Umkehrung ist.

6. Gerät zum Spielausgleich in einer Werkzeugmaschine nach Anspruch 5, bei dem in dem Verfahren ein Wert, der den Betrag des Spiels repräsentiert, voreingestellt wird, Spielausgleichsimpulse erzeugt werden, wenn eine Umkehrung der Bewegungsrichtung vorliegt, und der Spielsausgleich beendet wird, wenn die Anzahl der erzeugten Spielausgleichsimpulse mit dem voreingestellten Wert korrespondiert.

7. Gerät zum Spielausgleich in einer Werkzeugmaschine nach Anspruch 5 oder 6, bei dem in dem Verfahren ein Umschalten zwischen den ersten und zweiten Ausgleichsmodi in Reaktion auf einen G-Funktionsbefehl ausgeführt wird.

8. Gerät zum Spielausgleich in einer Werkzeugmaschine nach Anspruch 5 oder 6, bei der ein Ausgleichsmodus-Auswahlschalter in einem Bedienungsfeld vorgesehen ist und zwischen den ersten und zweiten Ausgleichsmodi durch Betätigen des Ausgleichsmodus-Auswahlschalters hin- und hergeschaltet wird.

# Fig.1 (A)

+Y
↑
→ +X

P₁

# Fig.1 (B)

P₁

# Fig.2 (A)

P₂

# Fig.2 (B)

P₂

# Fig.5

| Pulse | Direction | Output Pulse Sign |
|---|---|---|
| Command Pulse Pa | Commanded Direction Positive | + P |
| Command Pulse Pa | Negative | - P |
| Feedback Pulse Pf | Travelling Direction Positive | - P |
| Feedback Pulse Pf | Negative | - P |
| Compensation Pulse Pb | Travelling Direction Positive | + P |
| Compensation Pulse Pb | Negative | - P |

Fig. 3

# Fig . 4